# EUROPÄISCHE PATENTSCHRIFT

(11) **EP 3 736 201 B1**
(45) Veröffentlichungstag und Bekanntmachung des Hinweises auf die Patenterteilung: **04.05.2022**
(21) Anmeldenummer: 20000061.0
(22) Anmeldetag: 10.02.2020
(51) Int. Cl.: B62M 9/10, F16D 65/12, F16D 1/104

(54) **DREHMOMENTÜBERTRAGUNGSBAUGRUPPE FÜR EIN FAHRRAD**
TORQUE TRANSMISSION MODULE FOR A BICYCLE
MODULE DE TRANSMISSION DE COUPLE POUR UNE BICYCLETTE

(30) Priorität: 10.04.2019 DE 102019002638
(43) Veröffentlichungstag der Anmeldung: 11.11.2020
(73) Patentinhaber: SRAM Deutschland GmbH, 97424 Schweinfurt (DE)
(72) Erfinder: Vonend, Andreas, 97421 Schweinfurt (DE)

(56) Entgegenhaltungen:
- EP-A1- 3 064 425
- DE-A1-102010 040 045
- JP-U- S55 149 632
- US-A1- 2003 139 240
- US-A1- 2005 034 932
- US-A1- 2007 193 837

## Beschreibung

Die vorliegende Erfindung betrifft eine Drehmomentübertragungsbaugruppe für ein Fahrrad nach dem Oberbegriff von Patentanspruch 1, sowie ein Verfahren zur Herstellung einer Drehmomentübertragungsbaugruppe nach Patentanspruch 17.

Im Antriebsstrang und auch an anderen Stellen am Fahrrad, wie beispielsweise im Bereich von Scheibenbremsen, sind Drehmomente zu übertragen, die teilweise bzw. zeitweise sehr hoch ausfallen können. So können die im Bereich der Radnaben auftretenden Antriebs- bzw. Bremsmomente beim Fahrrad ohne weiteres mittlere bis hohe dreistellige Newtonmeter-Bereiche erreichen. Auch im Bereich des Tretlagers treten an der Verbindung zwischen Kurbel und Kettenblatt je nach Fahrergewicht und Fahrerposition hohe Drehmomente auf.

Diese Drehmomente führen zu entsprechend hohen zu übertragenden Kräften insbesondere an den Schnittstellen rotatorisch belasteter Baugruppen, wie beispielsweise am Übergang zwischen einem Zahnkranz oder Ritzel und einem Zahnkranz- bzw. Ritzelträger (sog. Spider), am Übergang zwischen einer Fahrradkurbel und einem dort angeordneten Kettenblatt-Spider, am Übergang zwischen einem Ritzel oder Ritzel-Spider und einem zugehörigen Freilauf-Antreiber eines Hinterrads, am Übergang zwischen einer Bremsscheibe und einem die Bremsscheibe tragenden Spider, oder zwischen Bremsscheiben-Spider und Fahrradnabe.

Dabei werden die zu übertragenden Kräfte naturgemäß umso größer, je kleiner der Durchmesser der entsprechenden Schnittstelle zwischen den jeweiligen rotatorisch belasteten Baugruppen ist. Entsprechend ist es aus dem Stand der Technik bekannt, für radial weiter außen angeordnete Bauteile wie beispielsweise Spider, Zahnkränze oder Ritzel weichere oder/und dünnere Materialien zu verwenden, da radial weiter außen entsprechend kleinere Kräfte und Belastungen auftreten. Ebenso werden für radial weiter innen angeordnete Bauteile, wie beispielsweise für die radial innen liegenden Bereiche von Spidern, entsprechend härtere oder/und dickere Materialien verwendet.

Hohe Belastungen und entsprechende hohe Anforderungen bestehen dabei insbesondere im Bereich solcher Übergänge zwischen Bauteilen oder Bauteilbereichen, an denen dünnere und/oder weichere Bauteile an dickere und/oder härtere Bauteile anschließen, bzw. an denen solche Bauteile miteinander zu verbinden sind.

Aus der Druckschrift EP3064425B1, beispielsweise aus Fig. 1d, ist eine Drehmomentübertragungsbaugruppe in Form eines Fahrrad-Ritzels mit Adapter bekannt. Dort ist das Material des Ritzels vergleichweise dünn, während der separat und aus einem anderen Material als das Ritzel hergestellte Adapter im Vergleich zum Ritzel eine relativ große Materialstärke aufweist. Bei diesem bekannten Stand der Technik wird der Adapter mit dem Ritzel dadurch verbunden, dass an dem Adapter entlang des Umfangs eines gedachten Teilkreises angeordnete zylindrische Nietvorsprünge in entsprechende Bohrungen des Ritzels eingepresst werden, wobei die Ritzel-Bohrungen entlang desselben Teilkreisumfangs wie die Vorsprünge des Adapters angeordnet sind.

Hierbei kann jedoch bei der Fertigung die Problematik auftreten, dass sich der Durchmesser des Teilkreises, auf dessen Umfang die Nietvorsprünge des Adapters angeordnet sind, ungewollt von demjenigen Teilkreisdurchmesser unterscheidet, auf dessen Umfang die Bohrungen des Ritzels angeordnet sind. Dies kann beispielsweise aufgrund von Fertigungstoleranzen des Ritzels und/oder des Adapters geschehen, oder zum Beispiel aufgrund von Verzug bzw. Schrumpfungen, die etwa beim Härten des Adapters auftreten können.

In jedem Fall können solche Unterschiede der Teilkreisdurchmesser an Ritzel und/oder Adapter, auf deren Umfängen die Nietvorsprünge bzw. Bohrungen angeordnet sind, oder auch etwaige Unrundheiten eines oder beider dieser Teilkreise dazu führen, dass die Verbindung zwischen Ritzel und Adapter nicht die vorgesehene Festigkeit erreicht. Ebenso können Schwierigkeiten in Form von unzulässig erhöhten Einpresskräften bei der Verpressung von Ritzel und Adapter auftreten, und schließlich können hierdurch entstehende, unerwünschte radiale Verspannungskräfte zum Verzug der Einheit aus Ritzel und Adapter, und damit zu einem entsprechend verschlechterten Rundlauf des Ritzels führen. All dies kann die Herstellungskosten erhöhen bzw. den Ausschuss bei der Herstellung vergrößern.

Ausgehend von diesem Stand der Technik ist es die Aufgabe der vorliegenden Erfindung, eine Baugruppe zur drehmomentübertragenden Verbindung rotatorischer Bauteile am Fahrrad bereitzustellen, mit der die vorgenannten Nachteile des Standes der Technik überwunden werden. Diese Aufgabe wird durch eine Drehmomentübertragungsbaugruppe mit den Merkmalen des Patentanspruchs 1, bzw. durch ein Verfahren mit den Merkmalen des Patentanspruchs 17 gelöst.

Bevorzugte Ausführungsformen sind Gegenstand der Unteransprüche.

Zur Lösung der vorgenannten Aufgabe umfasst die vorgeschlagene Drehmomentübertragungsbaugruppe eine Adaptereinrichtung, deren Funktion mit dem oben erwähnten Adapter aus der Druckschrift EP3064425B1 analog gesehen werden kann, sowie zumindest einen mit der Adaptereinrichtung drehmomentübertragend starr verbindbaren Treibkörper. Als nicht limitierendes, nur dem Verständnis dienendes Beispiel für einen Treibkörper kann das oben angesprochene Ritzel aus der Druckschrift EP3064425B1 herangezogen werden.

Die Adaptereinrichtung weist dabei eine Mehrzahl von zumindest drei jeweils mit radialer Richtungskomponente verlaufenden Tragarmen auf, und der zumindest eine Treibkörper besitzt eine entsprechende Mehrzahl an Tragausnehmungen, die zu den Tragarmen der Adaptereinrichtung positions- und formkomplementär ausgebildet sind. Somit ist jeweils ein Tragarm der Adaptereinrichtung in jeweils einer Tragausnehmung des Treibkörpers unter Ausbildung einer Presspassung aufnehmbar. Auf diese Weise sind Adaptereinrichtung und Treibkörper durch Verpressen fest miteinander verbindbar.

Erfindungsgemäß zeichnet sich die Drehmomentübertragungsbaugruppe dadurch aus, dass die durch Tragarm und Tragausnehmung gebildete Presspassung zwei Passungsebenen aufweist, die zueinander sowie zu einer die Rotationsachse der Drehmomentübertragungsbaugruppe enthaltenden, gedachten Ebene parallel sind, wobei zwischen Tragarm und Tragausnehmung entlang der radialen Richtungskomponente ein Spielmaß vorliegt. Dies bedeutet, dass die Presspassung zwischen der Adaptereinrichtung und dem zumindest einen Treibkörper, und damit die Relativposition von Tragarm und Tragausnehmung, lediglich in Umfangsrichtung, bezogen auf die Rotationsachse der Baugruppe, formschlüssig festgelegt ist. Hingegen besteht hinsichtlich einer radialen Richtungskomponente aufgrund des vorgenannten Spielmaßes keine feste Zuordnung der Position von Tragarm und Tragausnehmung.

Mit anderen Worten, die Pressverbindung zwischen der Adaptereinrichtung und dem zumindest einen Treibkörper ist nicht auf die Einhaltung von übereinstimmenden Teilkreisen angewiesen, wie dies beim eingangs beschriebenen Stand der Technik der Fall ist. Der Begriff "radiale Richtungskomponente" wird vorliegend verwendet, da die Tragarme der Adaptereinrichtung zur Verwirklichung der Erfindung nicht streng radial ausgerichtet sein müssen, sondern beispielsweise auch geschüsselt bzw. leicht spiralig oder schräg, bezogen auf die radiale Richtung, angeordnet sein können. In solchen Fällen kann die Längsachse jedes Tragarms außer einer radialen Richtungskomponente auch eine axiale und/oder in Umfangsrichtung, bezogen auf die Rotationsachse der Baugruppe, verlaufende Richtungskomponente aufweisen.

Dank des Spielmaßes können sich beim Verpressen von Adaptereinrichtung und Treibkörper etwaige Ungenauigkeiten zumindest entlang der radialen Richtungskomponente, die sich beispielsweise bei der Herstellung und/oder Wärmebehandlung eines oder beider Teile einstellen können, nicht mehr wie beim Stand der Technik dahingehend auswirken, dass sich eine ungünstige bzw. ungenaue Überdeckung der zu verpressenden Teile ergibt, mit den oben beschriebenen, unerwünschten Folgen, wie beispielsweise starke Erhöhung der Verpresskraft oder Verzug der miteinander verpressten Teile.

Die vorgeschlagene Drehmomentübertragungsbaugruppe ist dabei nicht auf die Übertragung von Antriebsmomenten zwischen verschiedenen Bauteilen eines Fahrrad-Antriebsstrangs beschränkt, sondern lässt sich beispielsweise auch zur Übertragung von Bremsmomenten zwischen verschiedenen Bauteilen oder Baugruppen einer Fahrradbremse, insbesondere einer Scheibenbremse, einsetzen.

Nach einer bevorzugten Ausführungsform ist die vorgenannte gedachte Ebene, welche die Rotationsachse der Baugruppe enthält, nicht nur parallel zu den Passungsebenen bzw. Passungsflächen von Tragarm und Tragausnehmung, sondern stellt auch eine Mittelebene zu den durch diese Passungsflächen definierten beiden Passungsebenen dar. Dies bedeutet mit anderen Worten, dass die Tragarme im wesentlichen in radialer Richtung verlaufen, bezogen auf die Rotationsachse der Baugruppe, und bei dieser Ausführungsform somit nicht etwa schräg oder spiralig, bezogen auf diese Rotationsachse. Eine etwaige Schüsselung von Adaptereinrichtung und/oder Treibkörper, ggf. auch im Bereich der Tragarme, bleibt auch bei dieser Ausführungsform jedoch unbenommen.

Nach einer weiteren bevorzugten Ausführungsform ist die Adaptereinrichtung einstückig ausgebildet, und umfasst einen radial weiter innen angeordneten Trägerkörper sowie mit dem Trägerkörper einstückig ausgebildete Tragarme. Dabei ragen die Tragarme im Bereich des Außenumfangs des Trägerkörpers nach radial außen ab. Die Tragarme sind bei dieser Ausführungsform somit so ausgebildet und angeordnet, dass diese in entsprechende Tragausnehmungen eines radial weiter außen angeordneten Treibkörpers eingreifen können, wodurch die feste und drehmomentübertragende Verbindung zwischen Adaptereinrichtung und Treibkörper hergestellt wird.

Eine weitere bevorzugte Ausführungsform sieht vor, dass die Adaptereinrichtung einstückig ausgebildet ist und einen radial weiter außen angeordneten Trägerkörper sowie mit dem Trägerkörper einstückig ausgebildete Tragarme umfasst. Dabei ragen die Tragarme im Bereich des Innenumfangs des Trägerkörpers nach radial innen ab. Bei dieser Ausführungsform sind die Tragarme somit so ausgebildet und angeordnet, dass diese in entsprechende Tragausnehmungen eines radial weiter innen angeordneten Treibkörpers eingreifen können. Hierdurch entsteht auch bei dieser Ausführungsform die feste und drehmomentübertragende Verbindung zwischen Adaptereinrichtung und Treibkörper.

Die Adaptereinrichtung, insbesondere eine einstückige Adaptereinrichtung, kann auch so ausgebildet sein, dass die Tragarme sowohl bereichsweise nach radial außen als auch bereichsweise nach radial innen abragen. Auf diese Weise kann dann beispielsweise sowohl radial innen als auch radial außen, bezogen auf die Adaptereinrichtung, jeweils ein Treibkörper angeordnet und mit der Adaptereinrichtung verbunden werden.

Nach einer weiteren bevorzugten Ausführungsform sind die Tragarme der Adaptereinrichtung zumindest auf einem Teil ihrer Länge auf einer Trägerfläche angeordnet, und mit dieser vorzugsweise einstückig ausgebildet. Die Trägerfläche kann anstelle des oben genannten Trägerkörpers, oder auch zusätzlich zu einem solchen Trägerkörper vorhanden sein.

Auf diese Weise werden die Tragarme verstärkt, und es ergibt sich eine zusätzliche Anlage zwischen dem zumindest einen Treibkörper und dem Adapter. Hierdurch kann der Rundlauf verbessert werden, und es können höhere Kippmomente zwischen Treibkörper und Adapter aufgenommen werden. Dies kann am Fahrrad besonders dann von Bedeutung sein, wenn der z.B. bei bestimmten Gängen einer Kettenschaltung auftretende Kettenschräglauf zu berücksichtigen ist. Der Kettenschräglauf erzeugt, zusätzlich zu der rotatorischen Belastung der Verbindung zwischen Ritzel und Adapter, auch erhebliche Kippmomente, wobei die Bezugsachse dieser Kippmomente rechtwinklig zur Achse der rotatorisch eingeleiteten Drehmomente verläuft.

Gemäß einer weiteren bevorzugten Ausführungsform weist die Drehmomentübertragungsbaugruppe zwei koaxial zueinander, bzw. ineinander und mit radialem Abstand voneinander anordenbare erste und zweite Treibkörper auf, die jeweils mit den weiter oben beschriebenen, zumindest drei Tragausnehmungen versehen sind. Gleichzeitig liegt bei dieser Ausführungsform die Adaptereinrichtung in Form einer Mehrzahl einzelner, separater Quaderstifte vor dergestalt, dass jeder Quaderstift mit einem ersten Ende in eine Tragausnehmung des radial innen anordenbaren, ersten Treibkörpers, und mit seinem anderen Ende in eine Tragausnehmung des radial außen anordenbaren, zweiten Treibkörpers eingreift.

Die Quaderstifte müssen dabei nicht streng quaderförmig sein, es genügt vielmehr, wenn diese im wesentlichen prismatisch geformt sind, bzw. zumindest zwei einander gegenüberliegende parallele Oberflächen besitzen, welche die Passungsebenen bzw. Passungsflächen bilden, die mit den entsprechenden Gegen-Passungflächen der Treibkörper verpresst werden.

Eine Variante der vorgenannten Ausführungsform besteht darin, dass es sich bei dem radial innen anordenbaren Treibkörper um einen Freilauf-Antreiber für eine Fahrrad-Hinterradnabe handelt. Eine ähnliche Variante ergibt sich, wenn bei der weiter oben beschriebenen Ausführungsform mit einstückiger Adaptereinrichtung und mit nach radial innen abragenden Tragarmen ein Freilauf-Antreiber als Treibkörper vorgesehen ist. Bei diesen Varianten ergibt sich somit eine direkte, drehmomentübertragende und feste Verbindung zwischen einem Adapter und einem Freilauf-Antreiber einer Fahrrad-Hinterradnabe.

Eine zu der vorstehenden Ausführungsform alternative Ausführungsform sieht vor, dass die Adaptereinrichtung eine radial innenliegend angeordnete Drehmomentübertragungsschnittstelle, beispielsweise eine Verzahnung oder Keilverzahnung, aufweist. Über die Drehmomentübertragungsschnittstelle lässt sich die Adaptereinrichtung beispielsweise mit einem Freilauf-Antreiber einer Fahrrad-Hinterradnabe drehmomentübertragend verbinden. Andere potentielle Einsatzmöglichkeiten für eine Adaptereinrichtung mit innenliegender Drehmomentübertragungsschnittstelle bestehen beispielsweise im Bereich der Tretlagerkurbel oder bei der Verbindung von Bremsscheiben mit Fahrradnaben am Vorder- oder Hinterrad eines Fahrrads.

Eine weitere Ausführungsform sieht (im Fall einer einstückigen Adaptereinrichtung) vor, dass die Adaptereinrichtung geschüsselt ausgebildet ist dergestalt, dass (orthogonal zur Baugruppen-Rotationsachse angeordnete) gedachte Mittelebenen des Trägerkörpers und der Tragarme der Adaptereinrichtung entlang der Baugruppen-Rotationsachse voneinander beabstandet angeordnet sind. Diese Ausführungsform ist insbesondere dann vorteilhaft, wenn ein im Bereich der Tragausnehmungen im wesentlichen flach ausgebildeter Treibkörper mit umlaufend geschlossenen Tragausnehmungen verwendet wird, wie dieser weiter unten beschrieben ist.

Nach einer weiteren bevorzugten Ausführungsform ist der zumindest eine Treibkörper geschüsselt ausgebildet dergestalt, dass die Treibkörper-Passungsebenen und der radial innere Auslauf der Treibkörper-Tragausnehmungen entlang der Baugruppen-Rotationsachse voneinander beabstandet angeordnet sind. Diese Ausführungsform kommt insbesondere dann zum Einsatz, wenn ein im wesentlichen flacher Adapter zusammen mit einem Treibkörper mit umlaufend geschlossenen Tragausnehmungen verwendet werden soll wie nachfolgend beschrieben.

Auch eine Kombination aus einer geschüsselt ausgebildeten Adaptereinrichtung mit einem ebenfalls geschüsselt ausgebildeten Treibkörper kann vorgesehen sein.

Gemäß einer weiteren bevorzugten Ausführungsform sind die Tragausnehmungen des zumindest einen Treibkörpers umlaufend geschlossen. Diese Ausführungsform wird vorzugsweise kombiniert entweder mit einem im Bereich der Tragausnehmungen geschüsselt ausgebildeten Treibkörper, oder mit einem geschüsselt ausgebildeten Adapter, wie weiter oben beschrieben. Umlaufend geschlossene Tragausnehmungen des zumindest einen Treibkörpers bringen insbesondere eine maßgeblich höhere Steifigkeit des Treibkörpers im Bereich der Tragausnehmungen, und somit den Vorteil einer höheren Drehmomentübertragungskapazität mit sich.

Eine weitere bevorzugte Ausführungsform sieht vor, dass ein bezüglich der Adaptereinrichtung radial außen angeordneten Treibkörper ein Spider zur Aufnahme zumindest eines Kettenrades eines Fahrrad-Antriebsstrangs ist. Hierbei kann es sich beispielsweise um einen Kassettenspider handeln, der bei den großen Ritzeln einer Ritzelkassette für Fahrrad-Kettenschaltungen zum Einsatz kommt. Bei dem Spider kann es sich ebenso auch um einen Kurbel-Spider zur Drehmomentübertragung im Bereich einer Fahrradkurbel handeln.

Nach einer weiteren bevorzugten Ausführungsform handelt sich bei einem bezüglich der Adaptereinrichtung radial außen angeordneten Treibkörper um ein Kettenrad eines Fahrrad-Antriebsstrangs. Bei dieser Ausführungsform kann somit ein Ritzel oder Kettenblatt für einen Fahrrad-Antriebsstrang direkt mit einem Adapter verpresst werden, ohne dass ein Spider radial zwischen dem Kettenrad und dem Adapter angeordnet ist.

Vorzugsweise weist die Adaptereinrichtung fünf Tragarme, und der zumindest eine Treibkörper entsprechend fünf Tragausnehmungen auf. Es hat sich gezeigt, dass die Anzahl von fünf Tragarmen und Tragausnehmungen das Anforderungsprofil hinsichtlich Zentrierungswirkung, Herstellbarkeit und Drehmomentübertragung besonders gut erfüllt, wobei sich gleichzeitig eine gute Übereinstimmung mit existierenden Spidern ergibt, die oftmals als Fünf-Arm Ausführung vorliegen.

Weitere bevorzugte Ausführungsformen sehen vor, dass die Materialhärten von Adaptereinrichtung und Treibkörper zumindest im Bereich der Passungsebenen bzw. Passungsflächen unterschiedlich sind. Dabei kann entweder der Treibkörper härter als die Adaptereinrichtung sein, oder umgekehrt die Adaptereinrichtung härter als der Treibkörper. Auf diese Weise lässt sich beim Verpressen von Adaptereinrichtung und Treibkörper eine hohe Prozesssicherheit dadurch erzielen, dass die gewünschte Materialabtragung beim Verpressen definiert stets an einem der beiden Teile stattfindet.

Die Erfindung betrifft ferner ein Verfahren zum Herstellen einer Drehmomentübertragungsbaugruppe, wie diese im Vorstehenden beschrieben ist. Das Verfahren umfasst die nachfolgend dargestellten Verfahrensschritte.

Zunächst werden in einem anfänglichen Verfahrensschritt zumindest ein Treibkörper und eine Adaptereinrichtung hergestellt dergestalt, dass die Passungsebenen der Tragarme und die Passungsebenen der Treibkörper-Tragausnehmungen zusammen eine Übermaßpassung mindestens im Toleranzfeld-Bereich S-Z bilden. Diese Anforderung an die Übermaßpassung ergibt sich daraus, dass sicherzustellen ist, dass beim Verpressen der Adaptereinrichtung mit dem zumindest einen Treibkörper aufgrund erheblichen Übermaßes eine definierte Stanzwirkung bzw. Spanbildung zumindest an einem der beiden Passungsteile stattfindet.

In einem weiteren Verfahrensschritte erfolgt sodann die Positionierung von Adaptereinrichtung und Treibkörper entlang der Baugruppen-Rotationsachse axial übereinander dergestalt, dass die Tragarme die Tragausnehmungen überdecken.

Schließlich erfolgt in einem weiteren Verfahrensschritt das Verpressen von Adaptereinrichtung und Treibkörper entlang der Baugruppen-Rotationsachse, wobei eine gewollte Grat- bzw. Spanbildung im Bereich der Passungsebenen bzw. Passungsflächen stattfindet.

Das erfindungsgemäße Verfahren hat den Vorteil, dass hier zumindest eines der beiden zu verpressenden Teile, also entweder die Adaptereinrichtung oder der Treibkörper, gleichzeitig ein Stanz- bzw. Reibewerkzeug zur Fertigbearbeitung der Passungsflächen des jeweils anderen Teils bildet.

Mit anderen Worten findet beim Verpressen der beiden Teile gleichzeitig ein abschließender Stanz- bzw. Reibevorgang statt, bei dem das jeweils härtere Teil die Passungsflächen des jeweils weicheren Teils exakt passend so fertigbearbeitet, dass sich maß- und positionsgenau die gewünschte Presspassung und damit die feste Verbindung zwischen den beiden Teilen ergibt.

Hierbei findet gleichzeitig in vorteilhafter Weise eine automatische Selbstzentrierung der beiden zu verpressenden Teile bzw. Baugruppen statt unabhängig davon, ob diese vor dem Verpressen, in radialer Richtung bezogen auf die Rotationsachse der Baugruppe, exakt zueinander positioniert waren oder nicht, und unabhängig davon, ob etwaige Ungenauigkeiten bei Form, Ausrichtung und/oder Abmessung der Tragarme bzw. der Tragausnehmungen vorliegen. Das erfindungsgemäße Verfahren ist somit besonders fehlertolerant, sorgt dabei jedoch gleichzeitig für eine stets exakt koaxiale Ausrichtung der zu verpressenden Teile nach dem Verpressen.

Nachfolgend werden einzelne Ausführungsformen der vorliegenden Erfindung anhand lediglich schematischer Zeichnungen beispielhaft dargestellt.

Es zeigt:
- Fig. 1:: ein Fahrrad mit drehmomentübertragenden Baugruppen im Antriebs- und Bremsstrang;
- Fig. 2:: ein Ausführungsbeispiel einer Drehmomentübertragungsbaugruppe mit Adaptereinrichtung (nachfolgend vereinfacht als "Adapter" bezeichnet), Treibkörper und Ritzel in einer schrägen Vorderansicht;
- Fig. 3:: die Drehmomentübertragungsbaugruppe gemäß Fig. 2 in einer schrägen Rückansicht;
- Fig. 4:: den Adapter gemäß Fig. 2 und 3 in separater Darstellung;
- Fig. 5:: in vergrößerter Ausschnittsdarstellung Treibkörper und Adapter der Dreh-momentübertragungsbaugruppe gemäß Fig. 2 bis 4;
- Fig. 6:: in weiter vergrößerter Darstellung eine Tragausnehmung des Treibkörpers der Drehmomentübertragungbaugruppe gemäß Fig. 2 bis 5;
- Fig. 7:: in nochmals vergrößerter Darstellung die Tragausnehmung gemäß Fig. 6 mit darin angeordnetem Tragarm des Adapters;
- Fig. 8:: ein weiteres Ausführungsbeispiel einer Drehmomentübertragungsbaugruppe mit Treibkörper und scheibenförmigem Adapter in verschiedenen Ansichten;
- Fig. 9:: in schematischer Darstellung eine Ausführungsform einer Drehmomentübertragungsbaugruppe mit Adapter und außenliegendem Treibkörper;
- Fig. 10:: in schematischer Darstellung eine Ausführungsform einer Drehmomentübertragungsbaugruppe mit Adapter und innenliegendem Treibkörper;
- Fig. 11:: in schematischer Darstellung eine Ausführungsform einer Drehmomentübertragungsbaugruppe mit Adapter und zwei Treibkörpern; und
- Fig. 12:: in schematischer Darstellung eine weitere Ausführungsform einer Drehmomentübertragungsbaugruppe mit Adapter und zwei Treibkörpern.

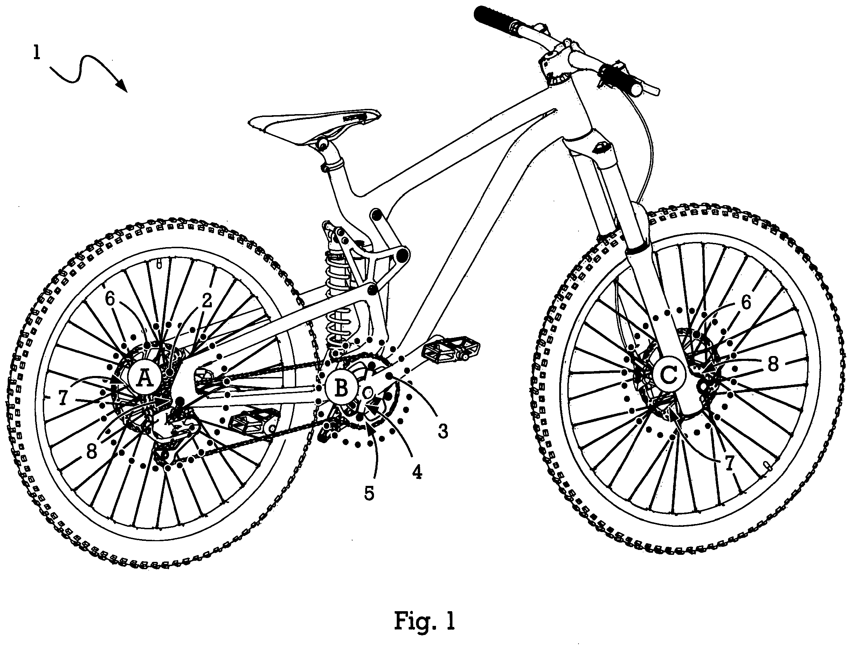

Fig. 1 zeigt ein für sich genommen bekanntes Fahrrad, hier beispielhaft dargestellt ein vollgefedertes Mountainbike.

Es ist bekannt, dass bei Fahrrädern im Antriebsstrang und auch an anderen Stellen, wie beispielsweise im Bereich von Scheibenbremsen, teilweise hohe bis sehr hohe Drehmomente auftreten bzw. zu übertragen sind. So können die im Bereich der Radnaben, in Fig. 1 also bei "A" bzw. "C" auftretenden Antriebs- bzw. Bremsmomente zeitweise mittlere bis hohe dreistellige Newtonmeter-Bereiche erreichen. Auch im Bereich des Tretlagers "B" treten insbesondere im Bereich der Verbindung zwischen Kurbel und Kettenblatt je nach Fahrergewicht und Fahrsituation hohe bis sehr hohe Drehmomente auf.

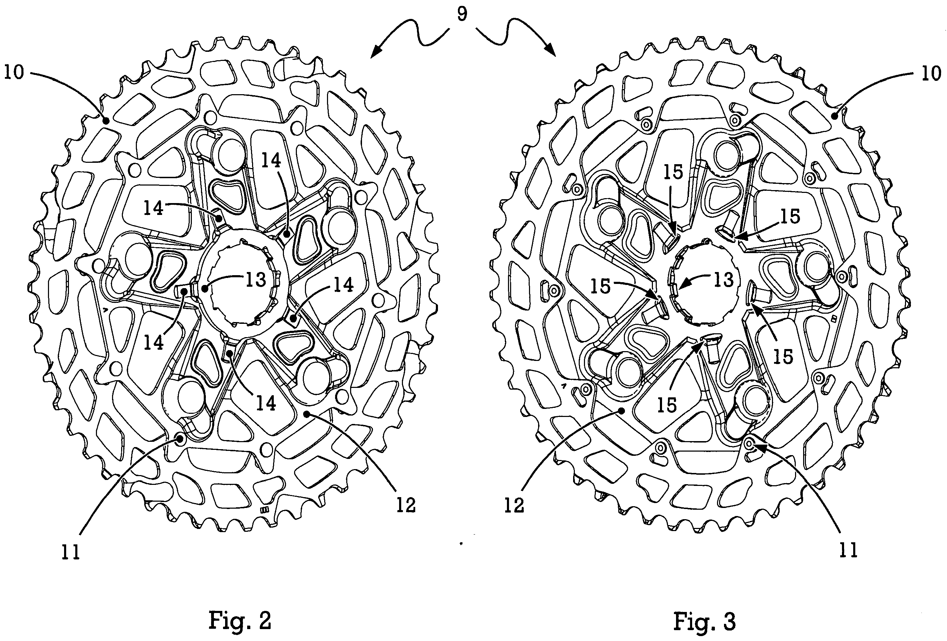

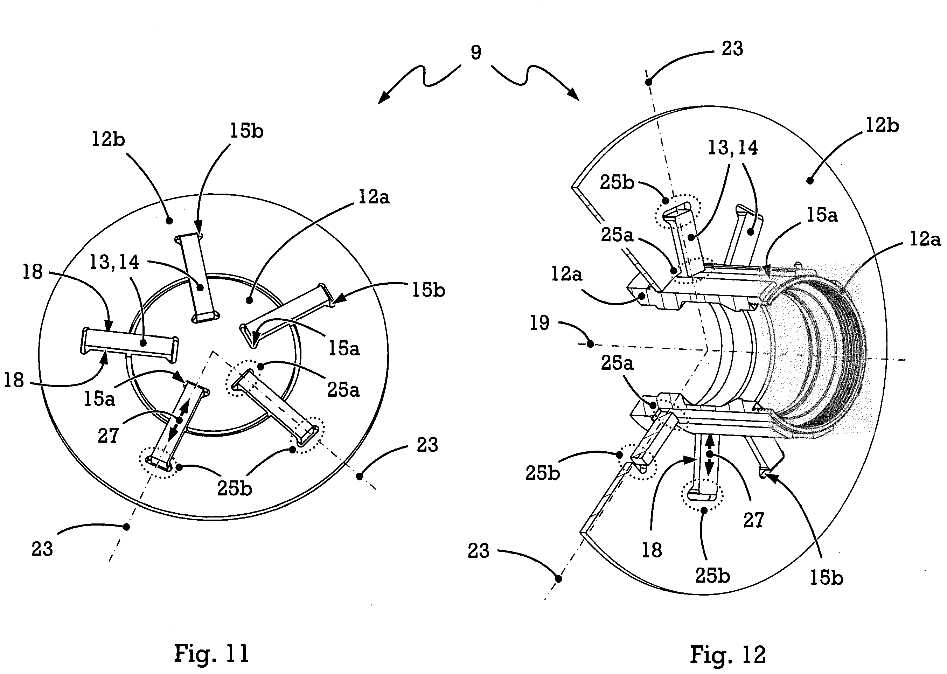

Diese Drehmomente erzeugen entsprechend hohe zu übertragende Kräfte insbesondere an den Schnittstellen zwischen rotatorisch belasteten Drehmomentübertragungsbaugruppen, beispielsweise in den Bereichen "A", "B" und "C" am Fahrrad. Zu den Schnittstellen innerhalb solcher Drehmomentübertragungsbaugruppen zählen beispielsweise die Übergänge zwischen einem Ritzel 10 an einer Zahnkranzkassette 2 und einem das Ritzel 10 tragenden Ritzel-Spider 12 (vgl. Fig. 2/3), zwischen einer Fahrradkurbel 3 und einem Kettenblatt-Spider 4 bzw. zwischen Kettenblatt-Spider 4 und Kettenblatt 5, zwischen einem Ritzel 10 oder Ritzel-Spider 12 einer Zahnkranzkassette 2 und einem zugehörigen Freilauf-Antreiber 12a (vgl. Fig. 12), am Übergang zwischen einer Bremsscheibe 6 und einem die Bremsscheibe 6 tragenden, ggf. von der Bremsscheibe 6 separaten Bremsscheiben-Spider 7, oder auch zwischen einem Bremsscheiben-Spider 7 und einer Fahrradnabe 8.

Die zur Übertragung der Brems- oder Antriebsdrehmomente innerhalb der jeweiligen Drehmomentübertragungsbaugruppe erforderlichen Kräfte werden dabei naturgemäß umso größer, je kleiner der Durchmesser der entsprechenden Schnittstelle zwischen den vorstehend beispielhaft genannten, rotatorisch belasteten Bauteilen ist.

Fig. 2 und 3 zeigen ein Ausführungsbeispiel für eine Drehmomentübertragungsbaugruppe 9 gemäß der vorliegenden Erfindung. Man erkennt zunächst ein Kettenrad 10, bei dem es sich vorliegend um ein Ritzel 10 einer Mehrfach-Zahnkranzkassette 2 (vgl. Fig. 1) für ein Fahrrad 1 handelt. Das Ritzel 10 ist mittels Nietverbindungen 11 auf einem Treibkörper 12 befestigt, wobei der Treibkörper 12 hier einem für sich genommen weitestgehend bekannten Ritzel-Spider entspricht.

Neben dem Treibkörper 12 erkennt man einen Adapter 13. Der Adapter 13 besitzt fünf im Wesentlichen radial verlaufende Tragarme 14, welche in formkomplementären Tragausnehmungen 15 des Treibkörpers 12 aufgenommen sind dergestalt, dass sich eine drehmomentübertragend starre Verbindung zwischen Adapter 13 und Treibkörper 12 ergibt.

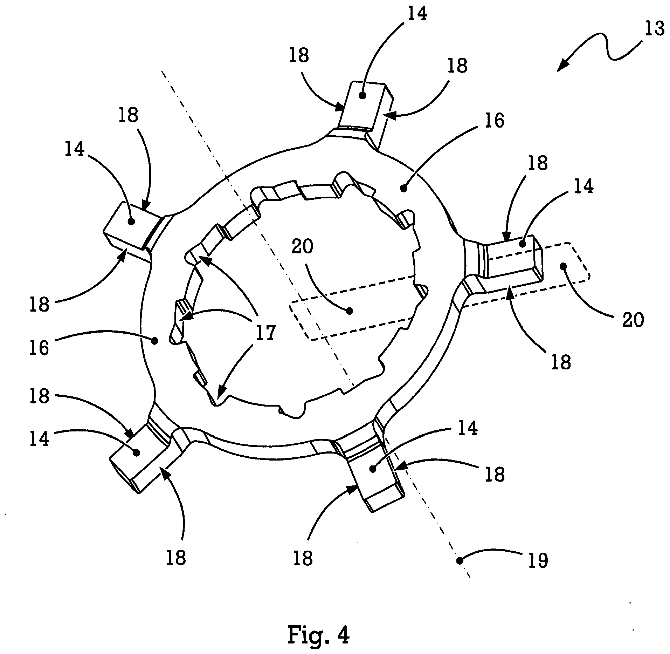

In Fig. 4 ist der Adapter 13 mit seinen fünf Tragarmen 14 separat dargestellt. Man erkennt, dass der Adapter 13 einstückig ausgebildet ist und neben den Tragarmen 14 einen im Wesentlichen ringförmigen Trägerkörper 16 aufweist. Der Trägerkörper 16 ist hier auf seiner radialen Innenseite mit einem Drehmomentübertragungsprofil 17 versehen, welches beispielsweise zur Übertragung von Antriebsdrehmomenten auf einen (hier nicht dargestellten) Freilauf-Antreiber 12a (vgl. Fig. 12) einer Hinterradnabe 8 eines Fahrrads 1 dient.

Die Tragarme 14 des Adapters 13 besitzen jeweils zwei Passungsebenen bzw. Passungsflächen 18. Die beiden Passungsflächen 18 jedes Tragarms 14, bzw. die gedachten Passungsebenen, die durch die Passungflächen 18 definiert werden, sind dabei zueinander sowie zu einer die Rotationsachse 19 des Adapters 13 (die mit der Rotationsachse 19 der Drehmomentübertragungsbaugruppe 9 übereinstimmt, vgl. Fig. 2, 3 und 12) enthaltenden, gedachten Ebene 20 parallel. Die gedachte Ebene 20, bei der es sich hier um eine Mittelebene zwischen den beiden Passungsebenen 18 handelt, also eine Ebene, die zu jeder der beiden Passungsebenen 18 parallel und von jeder der beiden Passungsflächen 18 gleich weit entfernt ist, ist in Fig. 4 mittels strichlierter Linie angedeutet.

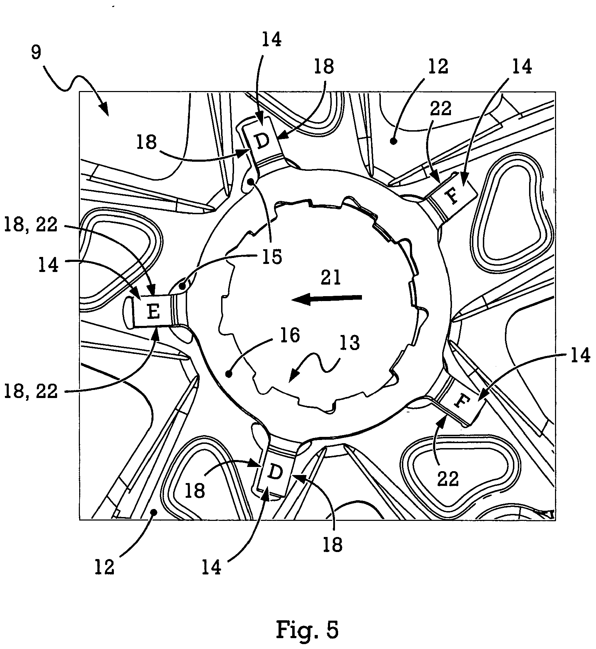

Fig. 5 zeigt in einer vergrößerten Ausschnittsdarstellung den Adapter 13 und den Treibkörper 12 (vorliegend also einen Ritzel-Spider einer Zahnkranzkassette 2 z.B. gemäß Fig. 2/3) in einer Situation kurz vor dem Fügen bzw. Verpressen von Treibkörper 12 und Adapter 13. Man erkennt, dass die Enden der Tragarme 14 des Adapters 13 bereits unmittelbar im Bereich der Tragausnehmungen 15 des Treibkörpers 12 angeordnet sind.

In der Darstellung von Fig. 5 ist der Adapter 13 gegenüber dem Treibkörper 12 bewusst nicht konzentrisch angeordnet, sondern ein Stück weit entlang der Horizontalen, entgegen der Pfeilrichtung 21, zeichnungsbezogen nach rechts verschoben. Der besseren Erkennbarkeit halber ist das Maß der Verschiebung sehr stark überhöht dargestellt.

Mit der in Fig. 5 dargestellten Verschiebung 21 soll eine vor dem bzw. beim Fügeprozess zwischen Treibkörper 12 und Adapter 13 auftretende Ungenauigkeit bzw. Toleranz bei der konzentrischen Positionierung von Treibkörper 12 und Adapter 13, im Vorfeld des Verpressens von Treibkörper 12 und Adapter 13, verdeutlicht werden.

Unter der Berücksichtigung, dass die Toleranz bzw. Verschiebung 21 beim tatsächlichen Fügeprozess erheblich kleiner ausfällt als in Fig. 5 dargestellt, wird deutlich, wie sich Treibkörper 12 und Adapter 13 beim Verpressen selbsttätig konzentrisch zueinander ausrichten.

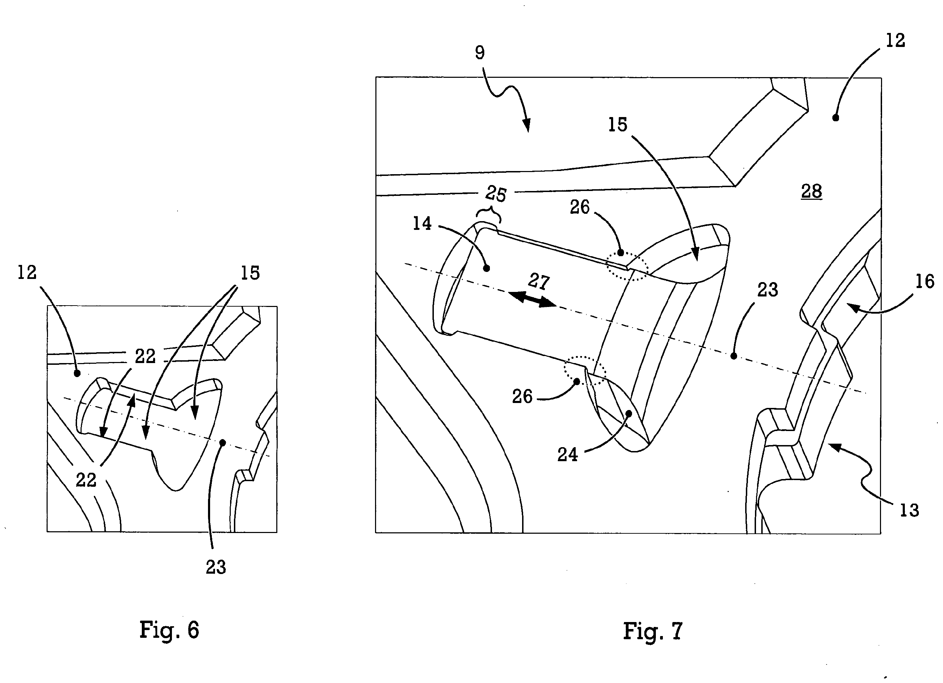

Dies geschieht dadurch, dass die Passungsflächen 18 der Tragarme 14 beim Verpressen von Treibkörper 12 und Adapter 13 zwischen die entsprechenden Gegen-Passungsflächen 22 (vgl. Fig. 6) gezwungen werden, wodurch der Adapter 13 entlang der Pfeilrichtung 21 bewegt und dementsprechend in eine schlussendlich exakt konzentrische Position mit dem Treibkörper 12 verbracht wird.

Hierbei wirken die in Fig. 5 mit Buchstabe "D" gekennzeichneten Tragarme 14, und in geringerem Maße auch die mit Buchstabe "F" bezeichneten Tragarme 14 im Hinblick auf die Erzeugung der zur Verschiebung 21 erforderlichen Bewegung bzw. Kraft nach zeichnungsbezogen links zusammen. Hingegen wirkt beim dargestellten Beispiel insbesondere der mit Buchstabe "E" gekennzeichnete Tragarm 14, und in geringerem Maße auch die mit Buchstabe "F" bezeichneten Tragarme 14 im Sinn einer Parallelführung zwischen Treibkörper 12 und Adapter 13. Diese Parallelführung erfolgt dadurch, dass die Passungsflächen 18 der jeweiligen Tragarme 14 des Adapters 13 entlang der entsprechenden Gegen-Passungsflächen 22 (vgl. Fig. 6) gleiten können.

Dieser Zusammenhang wird nochmals besonders deutlich in den vergrößerten Darstellungen gemäß Fig. 6 und 7. Fig. 6 und 7 zeigen jeweils vergrößerte Ausschnitte aus der Darstellung gemäß Fig. 5, wobei die Blickrichtung in Fig. 6 und 7 einer rückseitigen Richtung bezogen auf die Darstellung von Fig. 5 entspricht.

Dabei zeigt Fig. 6 zunächst eine der fünf Tragausnehmungen 15 des Treibkörpers 12 (also z.B. eines Ritzel-Spiders einer Zahnkranzkassette 2 gemäß Fig. 2/3). Man erkennt, dass die Tragausnehmung 15 auf ihrer Innenseite Gegen-Passungsflächen 22 aufweist, die zur Aufnahme der an den Tragarmen 13 des Adapters angeordneten seitlichen Passungsflächen 18 (vgl. Fig. 4/5) ausgebildet sind. Fig. 7 zeigt denselben Zeichnungsausschnitt wie Fig. 6 in weiter vergrößerter Darstellung, wobei in Fig. 7 der Adapter 13 in seiner finalen, verpressten Position relativ zum Treibkörper 12 dargestellt ist.

In Fig. 7 wird erkennbar, dass zwischen Tragarm 14 und Tragausnehmung 15 entlang der radialen Richtung 23, bezogen auf die Rotationsachse 19 (vgl. Fig. 4) der Drehmomentübertragungsbaugruppe 9 (vgl. Fig. 2/3), ein Spielmaß 25 vorliegt. Dieses Spielmaß 25 führt dazu, dass die Pressverbindung zwischen Treibkörper 12 und Adapter 13 unabhängig von einem bestimmten Teilkreisdurchmesser ist, auf dem die Passungsflächen beim eingangs beschriebenen Stand der Technik stets exakt übereinstimmend angeordnet sein müssen.

Vielmehr können sich die Passungsflächen von Treibkörper 12 und Adapter 13 gemäß der vorliegenden Erfindung auch auf unterschiedlich großen oder unrunden Teilkreisen befinden, was aufgrund von beispielsweise Fertigungstoleranzen oder Härtungsverzug an einem oder beiden Teilen jederzeit vorkommen kann, ohne dass dies hier jedoch den Fügeprozess, die Qualität der Fügung, oder den Rundlauf der gefügten Teile beeinträchtigt. Vielmehr wird aufgrund des Spielmaßes 25 eine im Umfang des Spielmaßes 25 frei veränderliche Relativpositionierung 27 von Tragarm 14 und Tragausnehmung 15 vor und während des Verpressens möglich. Die radiale Richtung 23 ist hier die einzige Richtungskomponente der Tragarme 14 des Adapters 13, da die Tragarme 14, abgesehen von ihrem versetzten bzw. geschüsselt verlaufenden Sockelbereich 24, in einer gemeinsamen Ebene angeordnet sind, wie dies insbesondere auch aus Fig. 4 ersichtlich ist. Mit anderen Worten, die Tragarme 14 verlaufen beim dargestellten Ausführungsbeispiel, abgesehen von ihrem Sockelbereich 24, in radialen Richtungen bezogen auf die Drehachse 19 der Baugruppe 9, und besitzen hier insbesondere keine axiale und/oder in Umfangsrichtung verlaufende Richtungskomponente, wie dies z.B. bei geschüsselt oder leicht spiralig verlaufenden Tragarmen der Fall sein kann, die ebenfalls von der vorliegenden Erfindung umfasst sind.

Außerdem erkennbar wird in Fig. 7, dass die Presspassung zwischen den Passungsflächen 22 (Fig. 6) der Tragausnehmungen 15 des Treibkörpers 12 und den darin aufgenommenen Passungsflächen 18 (Fig. 4) der Tragarme 14 des Adapters 13 beim dargestellten Ausführungsbeispiel so gewählt ist, dass sich eine deutliche Gratbildung 26 beim Verpressen von Treibkörper 12 und Adapter 13 einstellt, was insbesondere an den punktiert hervorgehobenen Stellen 26 in Fig. 7 erkennbar ist. Die Gratbildung 26 bedeutet mit anderen Worten, dass beim Einpressen der Tragarme 14 des Adapters 13 in die Tragausnehmungen 15 des Treibkörpers 12 ein kontrollierter spanender Materialabtrag erfolgt.

Dies geschieht reproduzierbar insbesondere dann, wenn Treibkörper 12 und Adapter 13 unterschiedliche Materialhärten aufweisen. So kann beispielsweise der Treibkörper 12, z.B. wenn es sich dabei um einen Ritzel-Spider einer Zahnkranzkassette handelt, aus einem weicheren Material bestehen als der Adapter 13, der beispielsweise aus gehärtetem Stahl bestehen kann. In diesem Fall fungiert der Adapter 13 beim Einpressen in die Tragausnehmungen 15 des Treibkörpers 12 zusätzlich als Stanz- bzw. Reibewerkzeug, welches die Passungsflächen 22 der Tragausnehmungen 15 des Treibkörpers 12 gleichzeitig mit dem Verpressvorgang fertigbearbeitet. Dies funktioniert auch umgekehrt, wenn also die Materialhärte des Treibkörpers 12 höher als diejenige des Adapters 13 ist. In diesem Fall bilden die Passungsflächen 22 der Tragausnehmungen 15 des Treibkörpers 12 ein Stanz- bzw. Reibewerkzeug, welches wiederum die Passungsflächen 18 der Tragarme 14 des Adapters 13 beim Verpressen fertigbearbeitet.

Diese gegenseitige Fertigbearbeitung der Passungsflächen am jeweils anderen Teil ist insofern vorteilhaft, als sich hierdurch die Anforderungen an die Fertigung- bzw. Passungsgenauigkeit zumindest eines der beiden Teile, und damit die Fertigungskosten, reduzieren lassen. Ebenso ergeben sich auf diese Weise eine besonders gute Reproduzierbarkeit der Presspassungen zwischen Treibkörper 12 und Adapter 13, und damit ein geringer Ausschuss bei der Fertigung ebenso wie eine Reduktion der im späteren Betrieb möglicherweise versagenden Bauteile.

Aus einer Zusammenschau von Fig. 7 und Fig. 2 bis 4 wird weiterhin ersichtlich, dass der Adapter 13 hier eine geschüsselte Form aufweist insofern, als eine gedachte Mittelebene des Trägerkörpers 16 von einer gedachten Mittelebene der Tragarme 14 entlang der Baugruppen-Rotationsachse 19 beabstandet angeordnet ist. Dies führt dazu, dass sich die Tragarme 14 und die Tragausnehmungen 15 des Treibkörpers 12 im verpresstem Zustand von Treibkörper 12 und Adapter 13 im Wesentlichen in derselben Ebene bezogen auf die Baugruppen-Rotationsachse 19 befinden, während jedoch der Trägerkörper 16 des Adapters 13, ebenso wie das hier am Trägerkörper 16 innenseitig angeordnete Drehmomentübertragungsprofil 17, sich außerhalb dieser dann gemeinsamen Ebene von Tragarmen 14 und Tragausnehmungen 15 befinden.

In der Darstellung von Fig. 7 wird dies dadurch ersichtlich, dass der Trägerkörper 16 des Adapters 13 hier zeichnungsbezogen unterhalb des Flächenbereichs 28 des Treibkörpers 12 liegt, während die in die Tragausnehmungen 15 eingepressten Tragarme 14 zeichnungsbezogen im wesentlichen auf derselben Höhe wie dieser Flächenbereich 28 des Treibkörpers 12 positioniert sind.

Diese geschüsselte Gestaltung des Adapters 13 ist vorteilhaft insofern, als sie ermöglicht, die Tragausnehmungen 15 des Treibkörpers 12 rundum geschlossen auszubilden, was besonders deutlich aus Fig. 6 und 7 hervorgeht, jedoch auch in Fig. 3 ersichtlich ist. Diese rundum geschlossene Ausbildung der Tragausnehmungen 15 des Treibkörpers 12 erhöht maßgeblich die konstruktive Steifigkeit des Treibkörpers 12 im Bereich der Tragausnehmungen 15, und ermöglicht dadurch u.a. eine hohe Flächenpressung zwischen den Passungsflächen 18 und 22 von Adapter 13 und Treibkörper 12, was wiederum zu einer hoch belastbaren Pressverbindung von Adapter 13 und Treibkörper 12 führt.

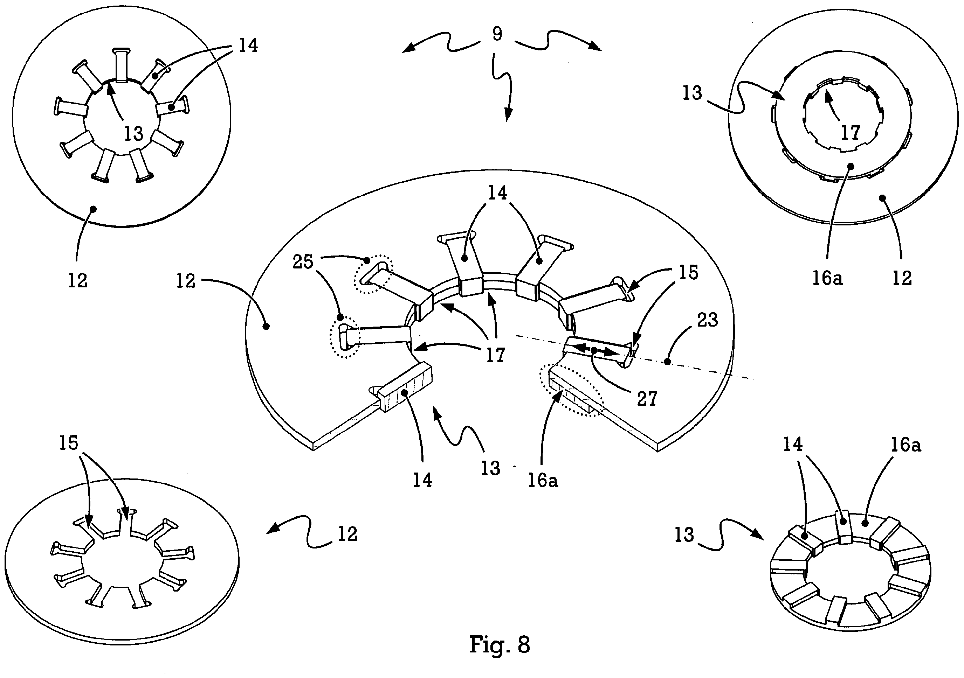

Fig. 8 zeigt in höchst schematischer Darstellung verschiedener Ansichten einer zu der Ausführungsform gemäß Fig. 2 bis 7 alternative Ausführungsform einer Drehmomentübertragungsbaugruppe 9. Auch hier ist wieder ein Treibkörper 12 und ein Adapter 13 ersichtlich, wobei der Treibkörper 12 wieder Tragausnehmungen 15, und der Adapter 13 wieder Tragarme 14 aufweist. Der wesentliche Unterschied zur vorstehenden Ausführungsform gemäß Fig. 2 bis 7 besteht darin, dass die Tragarme 14 des Adapters 13 bei der vorliegenden Ausführungsform gemäß Fig. 8 kaum vom Trägerkörper-Bereich 16 des Adapters 13 abragen, sondern im Wesentlichen in demselben radialen Abstandsbereich vom Zentrum bzw. von der Rotationsachse 19 der Baugruppe angeordnet sind wie der Trägerkörper-Bereich 16. Ansonsten stimmt die Ausführungsform gemäß Fig. 8 jedoch funktionell mit der Ausführungsform gemäß Fig. 2 bis 7 überein, insbesondere hinsichtlich der Selbstzentrierung durch die Möglichkeit der variablen radialen Relativpositionierung 27 der Tragarme 14 in den Tragausnehmungen 15 aufgrund des Spielmaßes 27, und hinsichtlich der Teilkreis-Unabhängigkeit von Treibkörper 12 und Adapter 13, wenn diese miteinander verpresst werden.

Auch weist die Drehmomentübertragungsbaugruppe 9 gemäß Fig. 8, ähnlich wie bei dem Adapter 13 (vgl. Fig. 4) der Drehmomentübertragungsbaugruppe gemäß Fig. 2 bis 7, wieder ein Drehmomentübertragungsprofil 17 auf, über welches z.B. aus dem Treibkörper 12 eingeleitetes Drehmoment über den Adapter 13 auf ein Anschlussbauteil, beispielsweise auf einen Freilauf-Antreiber (vgl. Fig. 12), auf eine Fahrradkurbel oder auf eine Fahrradnabe (vgl. Fig. 1) übertragen werden kann.

Bei der Ausführungsform gemäß Fig. 8 besteht zudem eine zusätzliche Stützungswirkung aufgrund der Anlage einer Trägerfläche 16a des Adapters 13 unmittelbar an der zugehörigen Gegenfläche des Treibkörpers 12, wie beispielsweise an der mittels punktierter Linie markierten Stelle bei 16a in Fig. 8 ersichtlich. Dies kann die Belastbarkeit der Verbindung zwischen Treibkörper 12 und Adapter 13 sowie den Rundlauf der so gebildeten Drehmomentübertragungsbaugruppe 9 erhöhen bzw. weiter verbessern.

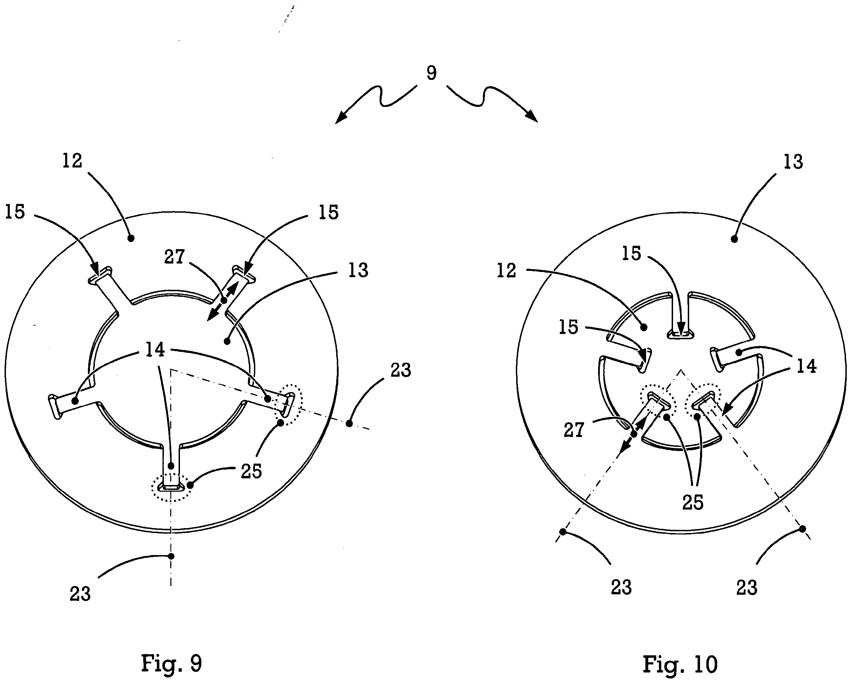

Fig. 9 und 10 zeigen in höchst schematisierter Darstellung weitere Ausführungsformen von Drehmomentübertragungsbaugruppen 9, welche jeweils wieder einen Treibkörper 12 und einen Adapter 13 umfassen, wobei bei diesen Ausführungsformen sowohl Treibkörper 12 als auch Adapter 13 vollständig flach ausgebildet sind.

Wie bei den weiter oben beschriebenen Ausführungsformen besitzt der Adapter 13 auch hier wieder eine Mehrzahl von radial verlaufenden Tragarmen 14, und der Treibkörper 12 eine Mehrzahl zu den Tragarmen 14 positions- und formkomplementärer Tragausnehmungen 15.

Die Tragarme 14 sind wieder in die Tragausnehmungen 15 eingepresst, wobei entlang der radialen Richtungen 23 zwischen Tragarm 14 und Tragausnehmung 15 jeweils ein Spielmaß 25 vorliegt, wie weiter oben insbesondere in Bezug auf Fig. 7 beschrieben. Auch hier ist somit wieder eine Selbstzentrierung durch die Möglichkeit der variablen radialen Relativpositionierung 27 der Tragarme 14 in den Tragausnehmungen 15, und eine Teilkreis-Unabhängigkeit der Pressverbindung zwischen Treibkörper 12 und Adapter 13 verwirklicht.

Man erkennt, dass der Unterschied zwischen den Ausführungsformen gemäß Fig. 9 und Fig. 10 darin besteht, dass bei der Ausführungsform gemäß Fig. 9 der Treibkörper 12 bezogen auf den Adapter 13 radial außenliegend angeordnet ist, während der Treibkörper 12 bei der Ausführungsform gemäß Fig. 10, bezogen auf den Adapter 13, radial innenliegend angeordnet ist. In beiden Fällen bilden jedoch die miteinander verpressten Bauteile Treibkörper 12 und Adapter 13 eine Drehmomentübertragungsbaugruppe 9 gemäß der vorliegenden Erfindung.

Die ebenfalls schematisch dargestellten Ausführungsformen gemäß Fig. 11 und 12 stimmen im Aufbau- und Funktionsprinzip mit den vorstehenden Ausführungsformen in wesentlichen Eigenschaften überein, insbesondere mit den Ausführungsformen gemäß Fig. 9 und 10. Man erkennt zunächst wieder einen Treibkörper 12, Adapter-Tragarme 14, Treibkörper-Tragausnehmungen 15 und ein Spielmaß 25 zwischen dem Ende des Tragarms 14 und dem Auslauf der zugehörigen Tragausnehmung 15 entlang der radialen Richtung 23.

Der wesentliche Unterschied zu den weiter oben beschriebenen Ausführungsformen besteht hier darin, dass bei den Ausführungsformen gemäß Fig. 11 und 12 nicht ein, sondern zwei Treibkörper vorhanden sind, und zwar ein innerer Treibkörper 12a und ein äußerer Treibkörper 12b. Dies bringt mit sich, dass der Adapter bzw. die Adaptereinrichtung 13 bei den Ausführungsformen gemäß Fig. 11 und 12 nicht einstückig vorliegt wie bei den weiter oben beschriebenen Ausführungsformen, sondern hier in Form einer Mehrzahl zunächst loser Quaderstifte. Mit anderen Worten, die für sich genommen losen Quaderstifte bilden hier nicht nur die Tragarme 14, sondern zusammengenommen gleichzeitig den gesamten Adapter 13.

Bei den Ausführungsformen gemäß Fig. 11 und 12 befindet sich sowohl zwischen den radial innen angeordneten Tragausnehmungen 15a und den dortigen Enden der die Tragarme 14 bildenden Quaderstifte, als auch zwischen den radial außen angeordneten Tragausnehmungen 15b und den dortigen Enden der die Tragarme 14 bildenden Quaderstifte jeweils ein Spielmaß 25a bzw. 25b.

Auf diese Weise können, wie weiter oben u.a. im Bezug auf Fig. 7 beschrieben, auch bei den Ausführungsformen gemäß Fig. 11 und 12 etwaige Größentoleranzen, wie beispielsweise Härtungsverzug und dergleichen, beim Fügen bzw. Verpressen der Adaptereinrichtung 13 mit den Treibkörpern 12a und 12b problemlos ausgeglichen werden.

Auch die oben insbesondere in Bezug auf Fig. 5 bis 7 beschriebene Selbstzentrierungswirkung beim Verpressen (hier sowohl bezüglich innerem Treibkörper 12a als auch äußerem Treibkörper 12b) und die Doppelfunktion entweder der Passungsflächen 18 der Tragarme 14 oder der Passungsflächen 22 (vgl. Fig. 6) der Tragausnehmungen 15 als Stanz- bzw. Reibewerkzeug, mit dem die jeweiligen Gegen-Passungsflächen gleichzeitig mit dem Verpressen fertigbearbeitet werden, ist bei den Ausführungsformen gemäß Fig. 11 und Fig. 12 gegeben. Denn obwohl jeder der die Tragarme 14 bildenden, hier losen Quaderstifte für sich genommen entlang der radialen Richtung 23 um das Spielmaß 25a/b weitgehend frei variabel anordenbar ist, führt die in Umfangsrichtung durch die Passungsflächen 18 (Fig. 11/12) und 22 (vgl. Fig. 6) stets exakt festgelegte Relativposition zwischen den Treibkörpern 12a, 12b und den den Adapter 13 bildenden Quaderstiften auch hier stets zu einer zwangsläufig exakt konzentrischen Anordnung von innerem Treibkörper 12a und äußerem Treibkörper 12b.

Bei der Ausführungsform gemäß Fig. 12 handelt es sich bei dem radial innenliegenden Treibkörper 12b um einen Freilauf-Antreiber für eine Hinterradnabe 8 an einem Fahrrad 1 (vgl. Fig. 1). Man erkennt, dass auf diese Weise ein Treibkörper 12b, bei dem es sich beispielsweise um ein Kassetten-Ritzel 10 oder um einen Ritzel-Spider 12 (vgl. Fig. 2/3) handeln kann, drehmomentübertragend fest mit dem Freilauf-Antreiber 12a verbunden werden kann. Wie bei den weiter oben beschriebenen Ausführungsformen ist auch diese Verbindung fehlertolerant und spannungsarm, und läuft aufgrund der vorstehend beschriebenen Selbstzentrierung grundsätzlich rund auch dann, wenn Teile der Baugruppe Fertigungstoleranzen oder Verzug durch Wärmebehandlung aufweisen sollten.

### Bezugszeichenliste

- 1: Fahrrad
- A, B, C: Antriebsstrang, Bremsstrang
- 2: Zahnkranzkassette
- 3: Tretlagerkurbel
- 4: Kettenblatt-Spider
- 5: Kettenblatt
- 6: Bremsscheibe
- 7: Bremsscheiben-Spider
- 8: Fahrradnabe
- 9: Drehmomentübertragungsbaugruppe
- 10: Kettenrad, Ritzel
- 11: Nietverbindungen
- 12, 12a/b: Treibkörper
- 13: Adaptereinrichtung, Adapter
- 14, D/E/F: Tragarm
- 15, 15a/b: Tragausnehmung
- 16: Trägerkörper
- 16a: Trägerfläche
- 17: Drehmomentübertragungsprofil
- 18: Passungsebenen, Passungsflächen
- 19: Rotationsachse
- 20: gedachte Ebene
- 21: Verschiebung, Fügetoleranz
- 22: Passungsebenen, Passungsflächen
- 23: radiale Richtungskomponente, radiale Richtung
- 24: Tragarm-Sockelbereich
- 25, 25a/b: Spielmaß
- 26: Gratbildung, Spanbildung
- 27: Relativpositionierung
- 28: Trägerkörper-Flächenbereich

## Patentansprüche

1. Drehmomentübertragungsbaugruppe (9) für ein Fahrrad (1), umfassend eine Adaptereinrichtung (13) sowie zumindest einen mit der Adaptereinrichtung (13) drehmomentübertragend starr verbindbaren Treibkörper (12), die Adaptereinrichtung (13) aufweisend eine Mehrzahl von zumindest drei jeweils mit radialer Richtungskomponente (23) verlaufenden Tragarmen (14), der zumindest eine Treibkörper (12) umfassend eine entsprechende Mehrzahl zu den Tragarmen (14) positions- und formkomplementärer Tragausnehmungen (15), wobei jeweils ein Tragarm (14) der Adaptereinrichtung (13) in einer Tragausnehmung (15) des zumindest einen Treibkörpers (12) unter Ausbildung einer Presspassung aufnehmbar ist,
**dadurch gekennzeichnet,**
**dass** die Presspassung von Tragarm (14) und Tragausnehmung (15) zwei Passungsebenen (18, 22) aufweist, die zueinander sowie zu einer die Rotationsachse (19) der Baugruppe (9) enthaltenden gedachten Ebene (20) parallel sind, wobei zwischen Tragarm (14) und Tragausnehmung (15) entlang der radialen Richtungskomponente (23) ein Spielmaß (25) vorliegt.

2. Drehmomentübertragungsbaugruppe (9) nach Anspruch 1,
**dadurch gekennzeichnet,**
**dass** die gedachte Ebene (20) eine Mittelebene zu den Passungsebenen (18, 22) bildet.

3. Drehmomentübertragungsbaugruppe (9) nach Anspruch 1 oder 2,
**dadurch gekennzeichnet,**
**dass** die Adaptereinrichtung (13) einstückig ausgebildet ist und einen radial innen angeordneten Trägerkörper (16) sowie Tragarme (14) umfasst, wobei die Tragarme (14) im Bereich des Außenumfangs des Trägerkörpers (16) nach radial außen abragend angeordnet sind.

4. Drehmomentübertragungsbaugruppe (9) nach Anspruch 1 oder 2,
**dadurch gekennzeichnet,**
**dass** die Adaptereinrichtung (13) einstückig ausgebildet ist und einen radial außen angeordneten Trägerkörper sowie Tragarme (14) umfasst, wobei die Tragarme (14) im Bereich des Innenumfangs des Trägerkörpers nach innen abragend angeordnet sind.

5. Drehmomentübertragungsbaugruppe (9) nach einem der Ansprüche 1 bis 4,
**dadurch gekennzeichnet,**
**dass** die Tragarme (14) der Adaptereinrichtung (13) zumindest auf einem Teil ihre Länge auf einer Trägerfläche (16a) angeordnet sind.

6. Drehmomentübertragungsbaugruppe (9) nach Anspruch 1 oder 2,
**gekennzeichnet durch**
zwei koaxial zueinander mit radialem Abstand voneinander anordenbare Treibkörper (12a/b) jeweils mit Tragausnehmungen (15a/b), wobei die Tragarme (14) als Quaderstifte ausgebildet sind, und wobei jeder Quaderstift mit einem ersten Ende in eine Tragausnehmung (15a) des radial innen anordenbaren Treibkörpers (12a) und mit dem anderen Ende in eine Tragausnehmung (15b) des radial außen anordenbaren Treibkörpers (12b) eingreift.

7. Drehmomentübertragungsbaugruppe (9) nach Anspruch 4 oder 6,
**dadurch gekennzeichnet,**
**dass** der radial innen anordenbare Treibkörper (12a) ein Freilauf-Antreiber einer Fahrrad-Hinterradnabe ist.

8. Drehmomentübertragungsbaugruppe (9) nach einem der Ansprüche 1 bis 6,
**dadurch gekennzeichnet,**
**dass** die Adaptereinrichtung (13) eine radial innenliegend angeordnete Drehmomentübertragungsschnittstelle (17) aufweist.

9. Drehmomentübertragungsbaugruppe (9) nach einem der Ansprüche 1 bis 8,
**dadurch gekennzeichnet,**
**dass** die Adaptereinrichtung (13) geschüsselt ausgebildet ist dergestalt, dass gedachte Mittelebenen des Trägerkörpers (16) und der Tragarme (14) entlang der Baugruppen-Rotationsachse (19) voneinander beabstandet angeordnet sind.

10. Drehmomentübertragungsbaugruppe (9) nach einem der Ansprüche 1 bis 8,
**dadurch gekennzeichnet,**
**dass** der zumindest eine Treibkörper (12) geschüsselt ausgebildet ist dergestalt, dass die Treibkörper-Passungsebenen (22) und der radial innere Auslauf der Tragausnehmungen (15) entlang der Baugruppen-Rotationsachse (19) voneinander beabstandet angeordnet sind.

11. Drehmomentübertragungsbaugruppe (9) nach einem der Ansprüche 1 bis 10,
**dadurch gekennzeichnet,**
**dass** die Tragausnehmungen (15) des zumindest einen Treibkörpers (12) umlaufend geschlossen sind.

12. Drehmomentübertragungsbaugruppe (9) nach einem der Ansprüche 1 bis 11,
**dadurch gekennzeichnet,**
**dass** ein bezüglich der Adaptereinrichtung (13) radial außen angeordneter Treibkörper (12, 12b) ein Spider zur Aufnahme zumindest eines Kettenrades (10) eines Fahrrad-Antriebsstrangs ist.

13. Drehmomentübertragungsbaugruppe (9) nach einem der Ansprüche 1 bis 11,
**dadurch gekennzeichnet,**
**dass** ein bezüglich der Adaptereinrichtung (13) radial außen angeordneter Treibkörper (12, 12b) ein Kettenrad (10) eines Fahrrad-Antriebsstrangs ist.

14. Drehmomentübertragungsbaugruppe (9) nach einem der Ansprüche 1 bis 13,
**dadurch gekennzeichnet,**
**dass** die Adaptereinrichtung (13) fünf Tragarme (14), und der zumindest eine Treibkörper (12) entsprechend fünf Tragausnehmungen (15) aufweist.

15. Drehmomentübertragungsbaugruppe (9) nach einem der Ansprüche 1 bis 14,
**dadurch gekennzeichnet,**
**dass** die Materialhärte der Adaptereinrichtung (13) zumindest im Bereich der Passungsebenen (18, 22) höher ist als die Materialhärte des Treibkörpers (12).

16. Drehmomentübertragungsbaugruppe (9) nach einem der Ansprüche 1 bis 14,
**dadurch gekennzeichnet,**
**dass** die Materialhärte der Adaptereinrichtung (13) zumindest im Bereich der Passungsebenen (18, 22) geringer ist als die Materialhärte des Treibkörpers (12).

17. Verfahren zum Herstellen einer Drehmomentübertragungsbaugruppe (9) nach einem der Ansprüche 1 bis 16, das Verfahren umfassend die nachfolgenden Verfahrensschritte:
a) Herstellung zumindest eines Treibkörpers (12) und einer Adaptereinrichtung (13) dergestalt, dass die Passungsflächen (18) der Tragarme (14) mit den Passungsflächen (22) der Treibkörper-Tragausnehmungen (15) eine Übermaßpassung mindestens im Toleranzfeld-Bereich S bis Z bilden;
b) Positionierung von Adaptereinrichtung (13) und Treibkörper (12) entlang der Baugruppen-Rotationsachse (19) axial übereinander dergestalt, dass die Tragarme (14) die Tragausnehmungen (15) überdecken;
c) Verpressen von Adaptereinrichtung (13) und Treibkörper (12) entlang der Baugruppen-Rotationsachse (19) unter Grat- oder Spanbildung (26) an den Passungsflächen (18, 22).

## Claims

1. Torque transmission assembly (9) for a bicycle (1), comprising an adapter device (13) and at least one driving body (12) that is rigidly connectable to the adapter device (13) in a torque transmitting manner, the adapter device (13) having a plurality of at least three support arms (14) that each extend with a radial direction component (23), the at least one driving body (12) comprising a corresponding plurality of support cutouts (15) of complementary position and shape to the support arms (14), wherein in each case one support arm (14) of the adapter device (13) is able to be received in a support cutout (15) of the at least one driving body (12), forming a press fit,
**characterized**
**in that** the press fit of the support arm (14) and support cutout (15) has two fitting planes (18, 22), which are parallel to one another and to an imaginary plane (20) containing the axis of rotation (19) of the assembly (9), wherein there is a clearance (25) between the support arm (14) and support cutout (15) along the radial direction component (23).

2. Torque transmission assembly (9) according to Claim 1,
**characterized**
**in that** the imaginary plane (20) forms a centre plane with respect to the fitting planes (18, 22) .

3. Torque transmission assembly (9) according to Claim 1 or 2,
**characterized**
**in that** the adapter device (13) is formed in one piece and comprises a carrier body (16), arranged radially internally, and support arms (14), wherein the support arms (14) are arranged in a manner projecting radially outwards in the region of the outer circumference of the carrier body (16) .

4. Torque transmission assembly (9) according to Claim 1 or 2,
**characterized**
**in that** the adapter device (13) is formed in one piece and comprises a carrier body, arranged radially externally, and support arms (14), wherein the support arms (14) are arranged in a manner projecting inwards in the region of the inner circumference of the carrier body.

5. Torque transmission assembly (9) according to one of Claims 1 to 4,
**characterized**
**in that** the support arms (14) of the adapter device (13) are arranged on a carrier surface (16a) at least along a part of their length.

6. Torque transmission assembly (9) according to Claim 1 or 2,
**characterized by**
two driving bodies (12a/b) that are arrangeable coaxially with one another with a radial spacing between one another and each have support cutouts (15a/b), wherein the support arms (14) are in the form of cuboid pegs, and wherein each cuboid peg engages with a first end in a support cutout (15a) of the driving body (12a) that is arrangeable radially internally and with the other end in a support cutout (15b) of the driving body (12b) that is arrangeable radially externally.

7. Torque transmission assembly (9) according to Claim 4 or 6,
**characterized**
**in that** the driving body (12a) that is arrangeable radially internally is a freewheel driver of a bicycle rear hub.

8. Torque transmission assembly (9) according to one of Claims 1 to 6,
**characterized**
**in that** the adapter device (13) has a torque transmission interface (17) arranged radially on the inside.

9. Torque transmission assembly (9) according to one of Claims 1 to 8,
**characterized**
**in that** the adapter device (13) is formed in a cupped manner such that imaginary centre planes of the carrier body (16) and of the support arms (14) are arranged in a manner spaced apart from one another along the assembly axis of rotation (19) .

10. Torque transmission assembly (9) according to one of Claims 1 to 8,
**characterized**
**in that** the at least one driving body (12) is formed in a cupped manner such that the driving body fitting planes (22) and the radially inner runout of the support cutouts (15) are arranged in a manner spaced apart from one another along the assembly axis of rotation (19).

11. Torque transmission assembly (9) according to one of Claims 1 to 10,
**characterized**
**in that** the support cutouts (15) of the at least one driving body (12) are circumferentially closed.

12. Torque transmission assembly (9) according to one of Claims 1 to 11,
**characterized**
**in that** a driving body (12, 12b) that is arranged radially externally with respect to the adapter device (13) is a spider for receiving at least one chain wheel (10) of a bicycle drivetrain.

13. Torque transmission assembly (9) according to one of Claims 1 to 11,
**characterized**
**in that** a driving body (12, 12b) that is arranged radially externally with respect to the adapter device (13) is a chain wheel (10) of a bicycle drivetrain.

14. Torque transmission assembly (9) according to one of Claims 1 to 13,
**characterized**
**in that** the adapter device (13) has five support arms (14), and the at least one driving body (12) correspondingly has five support cutouts (15).

15. Torque transmission assembly (9) according to one of Claims 1 to 14,
**characterized**
**in that** the material hardness of the adapter device (13) is greater than the material hardness of the driving body (12), at least in the region of the fitting planes (18, 22).

16. Torque transmission assembly (9) according to one of Claims 1 to 14,
**characterized**
**in that** the material hardness of the adapter device (13) is lower than the material hardness of the driving body (12), at least in the region of the fitting planes (18, 22).

17. Method for producing a torque transmission assembly (9) according to one of Claims 1 to 16, the method comprising the following method steps of:
a) producing at least one driving body (12) and one adapter device (13) such that the fitting surfaces (18) of the support arms (14) form, with the fitting surfaces (22) of the driving body support cutouts (15), an interference fit at least in the tolerance zone range S to Z;
b) positioning the adapter device (13) and driving body (12) one axially on top of the other along the assembly axis of rotation (19) such that the support arms (14) cover the support cutouts (15);
c) pressing the adapter device (13) and driving body (12) together along the assembly axis of rotation (19), with burr or chip formation (26) at the fitting surfaces (18, 22).

## Revendications

1. Module de transmission de couple (9) pour une bicyclette (1), comprenant un dispositif adaptateur (13) ainsi qu'au moins un corps d'entraînement (12) pouvant être relié de manière rigide au dispositif adaptateur (13) pour transmettre un couple, le dispositif adaptateur (13) présentant une pluralité d'au moins trois bras porteurs (14) s'étendant chacun avec une composante directionnelle radiale (23), l'au moins un corps d'entraînement (12) comprenant une pluralité correspondante d'évidements porteurs (15) complémentaires en position et en forme par rapport aux bras porteurs (14), un bras porteur (14) du dispositif adaptateur (13) pouvant respectivement être logé dans un évidement porteur (15) de l'au moins un corps d'entraînement (12) en formant un ajustement serré,
**caractérisé en ce que**
l'ajustement serré du bras porteur (14) et de l'évidement porteur (15) présente deux plans d'ajustement (18, 22), qui sont parallèles entre eux ainsi qu'à un plan imaginaire (20) contenant l'axe de rotation (19) du module (9), un jeu (25) étant présent entre le bras porteur (14) et l'évidement porteur (15) le long de la composante directionnelle radiale (23).

2. Module de transmission de couple (9) selon la revendication 1,
**caractérisé en ce que**
le plan imaginaire (20) forme un plan médian par rapport aux plans d'ajustement (18, 22).

3. Module de transmission de couple (9) selon la revendication 1 ou 2,
**caractérisé en ce que**
le dispositif adaptateur (13) est configuré en une seule pièce et comprend un corps de support (16) agencé radialement à l'intérieur ainsi que des bras porteurs (14), les bras porteurs (14) étant agencés en saillie radialement vers l'extérieur dans la zone de la périphérie extérieure du corps de support (16).

4. Module de transmission de couple (9) selon la revendication 1 ou 2,
**caractérisé en ce que**
le dispositif adaptateur (13) est configuré en une seule pièce et comprend un corps de support agencé radialement à l'extérieur ainsi que des bras porteurs (14), les bras porteurs (14) étant agencés en saillie vers l'intérieur dans la zone de la périphérie intérieure du corps de support.

5. Module de transmission de couple (9) selon l'une quelconque des revendications 1 à 4,
**caractérisé en ce que**
les bras porteurs (14) du dispositif adaptateur (13) sont agencés, au moins sur une partie de leur longueur, sur une surface de support (16a).

6. Module de transmission de couple (9) selon la revendication 1 ou 2,
**caractérisé par**
deux corps d'entraînement (12a/b) pouvant être agencés coaxialement l'un par rapport à l'autre à une distance radiale l'un de l'autre, comportant chacun des évidements porteurs (15a/b), les bras porteurs (14) étant configurés sous forme de goupilles parallélépipédiques, et chaque goupille parallélépipédique s'engageant par une première extrémité dans un évidement porteur (15a) du corps d'entraînement (12a) pouvant être agencé radialement à l'intérieur et par l'autre extrémité dans un évidement porteur (15b) du corps d'entraînement (12b) pouvant être agencé radialement à l'extérieur.

7. Module de transmission de couple (9) selon la revendication 4 ou 6,
**caractérisé en ce que**
le corps d'entraînement (12a) pouvant être agencé radialement à l'intérieur est un entraîneur à roue libre d'un moyeu de roue arrière de bicyclette.

8. Module de transmission de couple (9) selon l'une quelconque des revendications 1 à 6,
**caractérisé en ce que**
le dispositif adaptateur (13) présente une interface de transmission de couple (17) agencée radialement à l'intérieur.

9. Module de transmission de couple (9) selon l'une quelconque des revendications 1 à 8,
**caractérisé en ce que**
le dispositif adaptateur (13) est configuré sous forme concave, de telle sorte que des plans médians imaginaires du corps de support (16) et des bras porteurs (14) sont agencés à distance les uns des autres le long de l'axe de rotation (19) du module.

10. Module de transmission de couple (9) selon l'une quelconque des revendications 1 à 8,
**caractérisé en ce que**
l'au moins un corps d'entraînement (12) est configuré sous forme concave, de telle sorte que les plans d'ajustement (22) du corps d'entraînement et la sortie radialement intérieure des évidements porteurs (15) sont agencés à une distance les uns des autres le long de l'axe de rotation (19) du module.

11. Module de transmission de couple (9) selon l'une quelconque des revendications 1 à 10,
**caractérisé en ce que**
les évidements porteurs (15) de l'au moins un corps d'entraînement (12) sont fermés sur la périphérie.

12. Module de transmission de couple (9) selon l'une quelconque des revendications 1 à 11,
**caractérisé en ce que**
un corps d'entraînement (12, 12b) agencé radialement à l'extérieur par rapport au dispositif adaptateur (13) est une araignée destinée à recevoir au moins une roue à chaîne (10) d'une chaîne cinématique de bicyclette.

13. Module de transmission de couple (9) selon l'une quelconque des revendications 1 à 11,
**caractérisé en ce que**
un corps d'entraînement (12, 12b) agencé radialement à l'extérieur par rapport au dispositif adaptateur (13) est une roue à chaîne (10) d'une chaîne cinématique de bicyclette.

14. Module de transmission de couple (9) selon l'une quelconque des revendications 1 à 13,
**caractérisé en ce que**
le dispositif adaptateur (13) comporte cinq bras porteurs (14), et l'au moins un corps d'entraînement (12) présente en conséquence cinq évidements porteurs (15) .

15. Module de transmission de couple (9) selon l'une quelconque des revendications 1 à 14,
**caractérisé en ce que**
la dureté de matériau du dispositif adaptateur (13) est supérieure, au moins dans la zone des plans d'ajustement (18, 22), à la dureté de matériau du corps d'entraînement (12).

16. Module de transmission de couple (9) selon l'une quelconque des revendications 1 à 14,
**caractérisé en ce que**
la dureté de matériau du dispositif adaptateur (13) est inférieure, au moins dans la zone des plans d'ajustement (18, 22), à la dureté de matériau du corps d'entraînement (12).

17. Procédé de fabrication d'un module de transmission de couple (9) selon l'une quelconque des revendications 1 à 16, le procédé comprenant les étapes de procédé suivantes :
a) la fabrication d'au moins un corps d'entraînement (12) et d'un dispositif adaptateur (13), de telle sorte que les surfaces d'ajustement (18) des bras porteurs (14) forment avec les surfaces d'ajustement (22) des évidements porteurs (15) du corps d'entraînement un surajustement au moins dans la plage de tolérance S à Z ;
b) le positionnement du dispositif adaptateur (13) et du corps d'entraînement (12) axialement l'un au-dessus de l'autre le long de l'axe de rotation (19) du module, de telle sorte que les bras porteurs (14) recouvrent les évidements porteurs (15) ;
c) l'assemblage par pression du dispositif adaptateur (13) et du corps d'entraînement (12) le long de l'axe de rotation (19) du module avec formation de bavures ou de copeaux (26) sur les surfaces d'ajustement (18, 22).
